# EUROPEAN PATENT SPECIFICATION

(11) **EP 2 783 102 B1**
(45) Date of publication and mention of the grant of the patent: **12.10.2016**
(21) Application number: 12753194.5
(22) Date of filing: 26.07.2012
(51) Int. Cl.: F03D 7/02, F03D 7/04, F03B 3/12, F03D 1/06

(54) **TURBINE BLADE**
TURBINENSCHAUFEL
PALE DE TURBINE

(30) Priority: 26.07.2011 GB 201112844
(43) Date of publication of application: 01.10.2014
(73) Proprietor: Abu Al-Rubb, Khalil, Doha (QA)
(72) Inventor: Abu Al-Rubb, Khalil, Doha (QA)
(74) Representative: Wallin, Nicholas James
(86) International application number: PCT/GB2012/051812
(87) International publication number: WO 2013/014463

(56) References cited:
- EP-A2- 2 000 665
- EP-A2- 2 138 717
- WO-A1-2006/133715
- US-A1- 2010 158 687

## Description

### FIELD OF EMBODIMENTS OF THE INVENTION

Embodiments of the invention relate to a blade for use with turbines and, in particular, wind turbines.

### BACKGROUND

As the dangers and environmental impact of traditional coal, oil, gas and nuclear power generation become better understood and appreciated, there is an increasing desire for alternative forms of generating power. In recent years, one of the more successful alternative methods of generating energy has been wind power. There are many different known arrangements for generating wind power, but most rely on the principle of providing a turbine having blades arranged to turn as a result of the force of the wind and to thereby generate energy.

The efficiency with which such wind-based electricity generation occurs depends upon the efficiency with which the kinetic energy of the wind can be converted into electrical energy which, in turn, depends upon the efficiency with which the blades can rotate about their axis of rotation.

Due to the manner in which wind turbines operate, the blades which rotate under the influence of the wind are often orientated to rotate vertically with respect to the ground. Therefore, for each up-stroke it is necessary to lift the blade against the force of gravity.

Furthermore, one of the known problems experienced during wind generation is that the blade arrangement (or the portion undergoing rotation due to the wind) is subjected to significantly varying forces as the speed of the wind changes. It is therefore known to simultaneously vary the moment of inertia of all of the blades of a blade arrangement by varying a weight arrangement about an axis of rotation. Such an arrangement is, for example, disclosed in WO 2004/011801.

However, such known arrangements vary the moment of inertia symmetrically and simultaneously about the axis of rotation. Furthermore, the means proposed for varying the moment of inertia rely on relatively expensive and friction-inducing arrangements.

Furthermore, blades used in known arrangements can be heavy causing wear on the bearings used to support the rotation of the blades. KR 2001 0067856 A discloses a rotor blade formed by a tube of a thin bullet-proof film filled with a helium gas reinforced by a bullet-proof textile laminated onto the tube. EP 2 138 717 discloses a method whereby blade pitch portions are pitched based on filtered input signals.

### SUMMARY

According to a first aspect, the invention provides a blade for a turbine comprising a body portion having a tip wherein in the tip is moveable relative to the body portion to vary the aerodynamic properties of the blade.

By moving the tip of the blade relative to a body portion, embodiments of the invention can vary the aerodynamic profile of the blade. Where blades are mounted vertically with respect to the ground they rotate against the force of gravity for half of the rotation. In such circumstances, a small change in the aerodynamic profile of the blade can counteract the force of gravity, thereby significantly reducing the force required to lift the blade against gravity. This provides for a more efficient wind turbine incorporating such blades.

The blade further comprises a hinge connecting the tip to the body portion. In such embodiments, the tip articulates about the hinge.

The blade may further comprise an actuator for moving the tip relative to the body portion. In an embodiment, the actuator may comprise a motor and pulley system or worm gear or other mechanical, electrical or hydraulic actuator.

According to the invention the blade arrangement comprises a plurality of blades as described arranged to rotate about an axis, the blade arrangement further comprising a sensor for determining a rotational position of a selected one of the blades relative to the axis and, in dependence on the position, moving the tip of the selected blade relative to the body portion of the selected blade.

The actuator may be connected to the sensor, in which case the actuator may move the tip relative to the body portion to alter the aerodynamic profile of the selected blade to assist the rotational motion of the blade.

The actuator may move the tip to a first position while the blade undergoes a downward motion and move the tip to a second position while the blade undergoes an upward motion.

The aerodynamic profile of the blade with the tip in the first position may assist downward rotation of the blade about the axis.

The aerodynamic profile of the blade with the tip in the second position may assist upward movement of the blade about the axis.

According to a further aspect, the invention provides a method of operating a blade for a turbine having a body portion and a tip, the method comprising moving the tip relative to the body portion to vary the aerodynamic properties of the blade.

A hinge connects the tip to the body portion.

The method may further comprise providing an actuator for moving the tip relative to the body portion.

The actuator may comprise a motor and pulley system. The actuator may comprise any mechanical, hydraulic or electrical system acting in the prescribed manner. In one embodiment, the actuator is a worm gear.

The invention provides a method of controlling a blade arrangement comprising a plurality of blades as described arranged to rotate about an axis, the method further comprising providing a sensor for determining a rotational position of a selected one of the blades relative to the axis, the method further comprising moving the tip of the selected blade relative to the body portion of the selected blade in dependence on the position of the selected blade about the axis.

The actuator may be connected to the sensor and the method may comprise using the actuator to move the tip relative to the body portion to alter the aerodynamic profile of the selected blade and thereby assist the rotational motion of the blade.

The method further comprises using the actuator to move the tip to a first position while the blade undergoes a downward motion and move the tip to a second position while the blade undergoes an upward motion.

The aerodynamic profile of the blade with the tip in the first position may assist downward rotation of the blade about the axis.

The aerodynamic profile of the blade with the tip in the second position may assist upward movement of the blade about the axis.

### BRIEF DESCRIPTION OF THE DRAWINGS

Example embodiments of the invention are hereinafter described with reference to the accompanying diagrams which are not to scale and where:
Figure 1 is a schematic diagram of a blade;
Figure 2 is a schematic arrangement of a blade;
Figure 3 is a schematic illustration of a blade;
Figure 4 is a schematic illustration of a blade according to the invention in a first configuration;
Figure 5 is a schematic illustration of the blade of Figure 4 in a further configuration;
Figure 6 is a schematic illustration of the blade of Figure 4 in a further configuration; and
Figure 7 is a schematic illustration of a blade arrangement according to the invention.

### DESCRIPTION OF EXAMPLE EMBODIMENTS

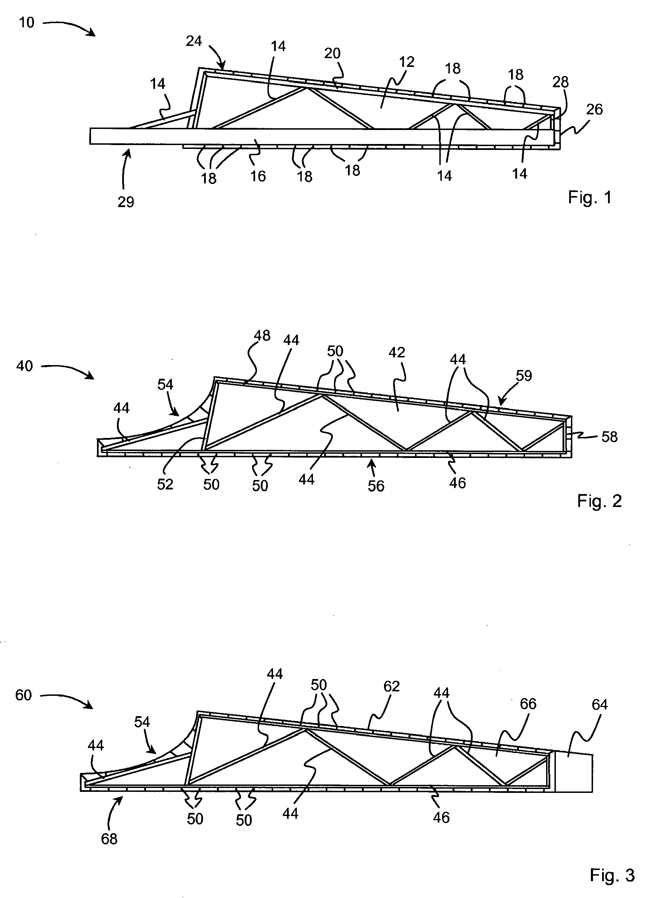

Figure 1 illustrates a blade 10 according to an embodiment not part of the invention. The blade 10 comprises a frame 24 made out of struts 16 and 20 connected by crossbeams 14. The strut 16 lies along an edge of the blade 20 corresponding to the leading edge (in other words the edge which first engages with the fluid through which the blade passes as it rotates). Strut 20 corresponds to the trailing edge of the blade 10 (in other words the edge trailing the motion of the blade 10 as it rotates).

The blade 10 further comprises a sail 12 attached to the frame 24 by the means of a plurality of lines 18. In the embodiment illustrated in Figure 1, the sail 12 is connected to the frame 24 by the lines 18 engaged between the edges of the sail 12 and the strut 16 of the leading edge and the strut 20 of the trailing edge, as well as a number of lines 18 attached between the tip edge 26 of the sail and a tip strut 28 of the frame 24. In an alternative embodiment, the sail 12 is connected to the frame 24 by hooks or other mechanical or chemical fitting means.

In each of the embodiments illustrated and described, where a sail is connected to a frame, the sail is illustrated as being connected to only one side of the frame (the back, with reference to the drawings). However, it is to be realised that embodiments of the invention may be provided with a sail covering both sides of the frame, in which case the frame would not be ordinarily visible. Further embodiments have two sails connected to obverse sides of the frame.

In the embodiment illustrated in Figure 1, the strut 16 is hollow and has been filled with helium. The blade 10 is designed to be deployed in air and to rotate through action of the wind on the sail 12. Strut 16 corresponds to the leading edge of the blade and, in the embodiment illustrated, corresponds to the longest structural element of frame 24. According to this embodiment, only a single structural element of the frame 24 is filled with helium. In this instance, by providing the longest structural element filled with helium, the greatest buoyancy is achieved for the least amount of engineering involved in ensuring that the particular structural element is gastight.

As stated, the blade is intended to be deployed in air and, since helium is less dense than air, the strut 16 will contribute to the buoyancy of the blade 10. In further embodiments fluids other that Helium may be used to fill the buoyant element. The functional and cost-effectiveness of the fluid used will depend on the fluid in which the blade is to be disposed. In a further example, the blade is intended to be disposed in water, in which case the buoyant element is filled with air, which is cheaper than Helium but which, nonetheless, contributes to the buoyancy of the blade in that environment.

In the embodiment illustrated in Figure 1, only a single structural element of the frame 24, strut 16, is provided filled with helium which therefore forms a buoyant element. In a further embodiment, two or more structural elements of the frame 24 may be filled with helium or other fluid. For example, with reference to Figure, both struts 16 and 20 may be filled with Helium. Although this will provide greater buoyancy, it does require that each structural element to be filled with helium be engineered to be gastight.

In a further embodiment, the entire frame, or a substantial part of the frame, is provided as a continuous, gas-filled element.

By providing a structural element which adds stiffness (structural rigidity) and buoyancy to the blade, the support function as well as a buoyancy function are subsumed into the same element. This is substantially more cost-effective and efficient than known blades.

It is to be realised however that the provision of buoyancy is not essential, provided that the structural element is provided with an enclosed space under pressure. The pressurisation provides added stiffness which adds to the structural integrity of the element while not contributing significantly to the weight. This can apply to any of the structural elements illustrated in Fig 1.

The structural elements may be provided from carbon fibre, fibre glass, aluminium or any other light weight, impermeable material.

In certain embodiments, the structural elements are provided so that they are segmented. This facilitates transport and on-site construction.

Figure 2 illustrates a blade 40 according to a further embodiment not part of the invention. The blade 40 comprises a frame 54 to which a sail 42 is attached by lines 50. The frame 54 comprises a number of crossbars 44 attached to one another. Instead of cross bars, tensioned cables, wires or any structural element may be used. Alternatively, known fibre glass (or other material) wind blade construction may be used. At a bottom end of the blade, (measured with reference to the rotation of the blade, the side of the blade at which the numeral '54' is placed in Figure 2) a structural element 52 is provided connected one of the cross bars 44. Similarly, at a tip portion (also measured with respect to the rotation of the blade 40 during use) a structural element 58 is connected attached to a cross bar 44.

A leading edge of the blade 56 has a cord 46 running through its length and attached to the frame 54. Furthermore, at a trailing edge 59, the blade 40 comprises a cord 48 also attached to the frame 54.

In the embodiment of Figure 2, the cords 46 and 48 each provide a collapsible structure. Furthermore, the cords 46 and 48 each provide a lightweight reinforcement for the frame 54, significantly reducing the weight of the frame 54 over similar frames using rigid structures at the leading and trailing edges. Furthermore, collapsible structures such as cords are easy to pack and transport compared to more lengthy structural elements. Therefore, embodiments of the invention are suited to transport to regions which are accessible only over narrow mountain roads, rough terrain, or areas where no roads at all are provided.

Although the embodiment of Figure 2 includes two cords, cords 46 and 48, further embodiments of the invention comprise a single collapsible element, which may be a cord.

Figure 3 illustrates a blade 60 according to a further embodiment not part of the invention. The embodiment illustrated in Figure 3 is similar to the blade 40 illustrated in Figure 2 and, where appropriate, similar reference numerals have been used to refer to similar elements. The frame 54 of blade 60 has a sail 66 mounted thereon by lines 50. The sail 66, unlike the sail 42 of blade 40 illustrated in Figure 2, is not attached to a tip portion of the blade. Instead, the blade 60 comprises a cap 64 over the blade tip. The cap 64 provides additional reinforcing to the frame 54 and protects the tip of the blade 60 against the effect of the air passing the blade 60 which, it would appreciated, is at a greater speed at the tip of the blade than elsewhere along the length of the blade. Therefore the cap 64 serves to protect the portion of the blade 60 most vulnerable to wear during use. The cap 64 may be constructed from steel or fibreglass. Alternatively, the cap 64 may be a filled region of the blade 60.

Although the steel cap is illustrated in conjunction with cords 46 and 48, it is to be realised that such caps may be used in conjunction with any blades prone to wear and tear.

A further aspect is illustrated by comparison between the blade 60 of Figure 3 and the blade 10 of Figure 1. The blade 60 comprises a base portion 68 where the sail 66 is attached by lines 50 to the frame 54. In comparison, the blade 10 of Figure 1 includes a base portion 29 where the corresponding sail 12 is not connected to the supporting frame. In addition, element 44 in this embodiment may be provided as a tensioned cord. This provides extra stability to the blade by tensioning an additional portion of the blade.

It will be appreciated that the base portions 29 and 68 of corresponding blades 10 and 60 provide relatively little contribution to the function of the corresponding blade. The majority of the action of the blade is performed in the upper portions. Therefore, it has been realised that savings in both weight and materials can be made by providing a blade such as blade 10 of Figure 1 where a base portion of the frame does not support the sail, and the sail is substantially restricted to the functional portion of the blade 10. It is to be realised that a separate flexible sail is not essential. The blade may be provided as a unibody, or with a blade portion mounted on a structural frame, having a pressurised or tensioned portion or member and the advantages discussed herein still apply.

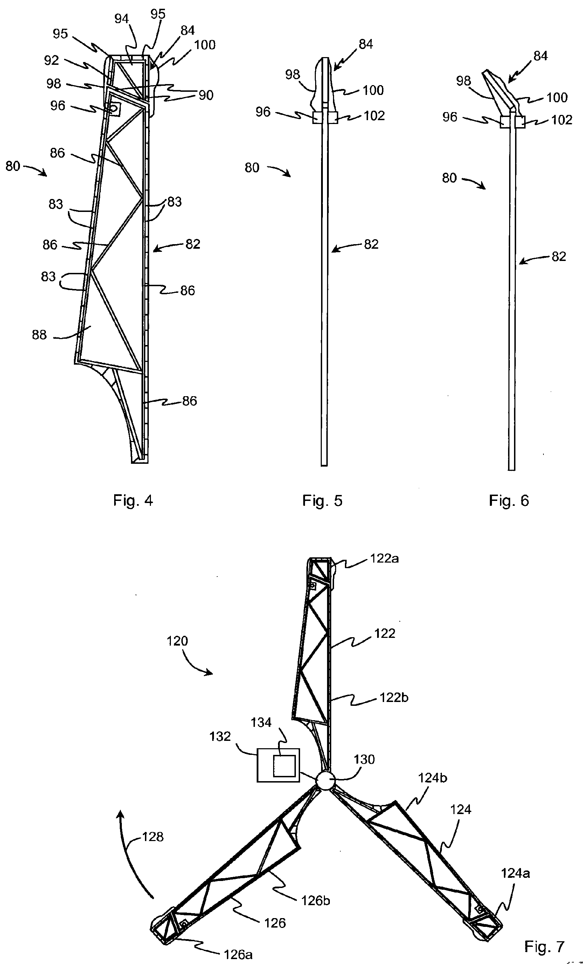

Figures 4, 5 and 6 illustrate a blade 80 according to the invention. As illustrated in Figure 4, blade 80 comprises a body portion 82 and a tip 84. The body portion 82 comprises a support frame made up of supporting struts 86 and a sail 88 connected to the struts 86 by lines 83.

Similarly, the tip 84 comprises a support frame made up of support struts 92 and a sail 94 connected to the support struts 92 by lines 94.

The tip 84 is connected to the body portion 82 by means of a hinge 90. In the embodiment shown the hinge 90 comprises two hinge members attached to the supporting struts 92 of the body portion 82 and the tip 84 (the means of attachment is not illustrated in Figure 4).

The blade 80 further comprises a motorised pulley 96 connected by means of a cord 98 to the tip 84. The motorised pulley 96 is mounted on body portion 82. The arrangement of the motorised pulley 96 and the cord 98 is better illustrated in Figure 5 which is a side view of the blade 80. As illustrated in Figure 5, the blade 80 further comprises a second motorised pulley 102 mounted on an obverse side of body portion 82 to motorised pulley 96. Motorised pulley 102 is connected to tip 84 by cord 100.

The motorised pulleys 96 and 102 control the tension of corresponding cords 98 and 100. By tensioning the cord in the appropriate manner, the motorised pulleys 96 and 102 can cause the tip 84 to articulate relative to body portion 82 about hinge 90.

Figure 6 illustrates the blade 80 when the motorised pulley 96 has been activated to tension cord 98 to cause tip portion 84 to articulate about hinge 90 relative to body portion 82. It will be realised that articulation of the tip 84 relative to body portion 82 in the other direction may be achieved through causing motorised pulley 102 to tension cord 100 while, at the same time, releasing the tension in cord 98 through appropriate activation of motorised pulley 96.

The pulleys 96 and 102 are controlled centrally by a controller, which is not illustrated in Figures 4, 5 and 6, but the operation of which is described below with reference to Figure 7.

Figure 7 illustrates a blade arrangement 120 comprising three blades 122, 124 and 126. Each of the blades 122, 124 and 126 is similar to the blade 80 illustrated in Figures 4, 5 and 6. Therefore blade 122 comprises body portion 122b and tip 122a; blade 124 comprises body portion 124b and tip 124a; and blade 126 comprises body portion 126b and tip 126a. The blades 122, 124 and 126 are mounted to an axel 130 and are arranged to rotate about the axel 130 in the direction of arrow 128 under the influence of a prevailing wind. It is to be realised that although the preferred embodiments refer to wind turbines, the principles herein described are equally applicable to blades for use in other turbines, such as flood turbines which operate in the sea.

Referring back to Figure 7, the blade arrangement 120 further comprises a controller 132 having a sensor 134 connected to axis 130. The sensor 134 detects the angular position of the blades 122, 124 and 126 about the axis 130. The controller 132 controls the articulation of the tips 122a, 124a and 126a through the use of corresponding motorised pulleys and cords in the manner described above with reference to Figures 4, 5 and 6.

As the blade arrangement 120 rotates, the sensor 134 detects the angular position of the blades and the controller controls the articulation of the tips. As the tips articulate, the aerodynamic profile of the corresponding blade is altered. By controlling the articulation of the tips in dependence upon the rotational position of the blades, the controller 132 is able to use the strength of the prevailing wind to lift the blade during the up-stroke. The tip is returned to its original position during the down-stroke to ensure that the blade maintains its maximum efficiency.

In this manner, the blade arrangement 120 provides an arrangement whereby rotation of the blades 122, 124 and 126 about axis 130 is more efficient when compared to a similar arrangement, also mounted vertically with respect to the ground, which does not alter the aerodynamic profiles of the blades' independence upon their rotational position.

For each of the blades 122, 124 and 126, changing the position of the tip relative to the body portion will alter the aerodynamic profile of that blade. It is to be realised that to do so the tip need not be very large in comparison to the body portion. In a particular embodiment, the surface area of the tip is less than 5% of the surface are of the entire blade. In yet a further embodiment, the surface are of the tip is less than 1% of the surface area of the entire blade. In yet a further embodiment, the surface are of the tip is less than 1% of the surface area of the entire blade.

It will be appreciated that the particular design of the tip and the lift created by articulation of this relative to the blade will depend on a number of factors such as the speed at which the blade arrangement is designed to operate, and the viscosity of the fluid in which the blade arrangement is disposed. In any event, the required shape and size of the tip relative to the body portion can be determined through trial and error.

## Claims

1. A blade arrangement for a turbine comprising a plurality of blades (80) arranged to rotate around an axis;
the blades comprising body portions (82) having respective tips (84), wherein the tips are hinged (90) to the body portions and can rotate around the hinge axis between a first position and a second position to vary the aerodynamic properties of the blades, wherein said hinge axis is in the plane of the blade and inclined with respect to the blades longitudinal axis;
the blade arrangement further comprising:
a sensor for determining a rotational position of a selected one or more of said blades relative to the axis, and,
an actuator arranged to move the tip of the selected one or more blades between the first and second positions in dependence on said rotational position to alter the aerodynamic profile of the selected blade to assist the rotational motion of the blade.

2. The blade arrangement according to the preceding claim wherein the actuator comprises a motor and pulley system (96).

3. The blade arrangement according to any preceding claim wherein the actuator moves the tip to the first position while the blade undergoes a downward motion and moves the tip to the second position while the blade undergoes an upward motion.

4. The blade arrangement according to any preceding claim wherein the aerodynamic profile of the blade with the tip in the first position assists downward rotation of the blade about the axis, and the aerodynamic profile of the blade with the tip in the second position assists upward movement of the blade about the axis.

5. A method of operating a blade arrangement for a turbine comprising a plurality of blades (80) arranged to rotate about an axis, and the blades having a body portion (82) and a tip (84) hinge to the body portion; the method comprising
providing a sensor for determining a rotational position of a selected one of said blades relative to the axis, and providing an actuator connected to the sensor, the method further comprising using the actuator for rotating the tip around its hinge axis between a first position and a second position in dependence on the rotational position of the blade about the axis, in order to alter the aerodynamic profile of the blade, and thereby to assist the rotational motion of the blade, said hinge axis being in the plane of the blade and inclined with respect to the blades longitudinal axis.

6. The method according to claim 5 further comprising using the actuator to move the tip to a first position while the blade undergoes a downward motion and move the tip to a second position while the blade undergoes an upward motion.

7. The method according to claim 6 wherein the aerodynamic profile of the blade with the tip in the first position assists downward rotation of the blade about the axis, and the aerodynamic profile of the blade with the tip in the second position assists upward movement of the blade about the axis.

## Patentansprüche

1. Rotorblattanordnung für eine Turbine, umfassend eine Vielzahl von Rotorblättern (80), die dazu angeordnet sind, um eine Achse zu rotieren;
wobei die Rotorblätter Körperabschnitte (82) mitjeweiligen Spitzen (84) aufweisen, wobei die Spitzen gelenkig an den Körperabschnitten befestigt (90) sind und zwischen einer ersten Position und einer zweiten Position um die Gelenkachse rotieren können, um die aerodynamischen Eigenschaften der Rotorblätter zu variieren, wobei die Gelenkachse sich in der Ebene des Rotorblatts befindet und mit Bezug auf die Längsachse des Rotorblatts geneigt ist;
wobei die Rotorblattanordnung ferner umfasst:
einen Sensor zum Bestimmen einer Rotationsposition eines oder mehrerer ausgewählter der Rotorblätter relativ zu der Achse und
einen Aktor, der dazu angeordnet ist, die Spitze der ausgewählten ein oder mehreren Rotorblätter in Abhängigkeit von der Rotationsposition zwischen der ersten und der zweiten Position zu bewegen, um das aerodynamische Profil des ausgewählten Rotorblatts zu verändern, um die Rotationsbewegung des Rotorblatts zu unterstützen.

2. Rotorblattanordnung gemäß dem vorstehenden Anspruch, bei welcher der Aktor ein Motor-Rollen-System (96) umfasst.

3. Rotorblattanordnung gemäß einem der vorstehenden Ansprüche, bei welcher der Aktor die Spitze an die erste Position bewegt, während das Rotorblatt eine Abwärtsbewegung ausführt, und die Spitze an die zweite Position bewegt, während das Rotorblatt eine Aufwärtsbewegung ausführt.

4. Rotorblattanordnung gemäß einem der vorstehenden Ansprüche, bei der das aerodynamische Profil des Rotorblatts mit der Spitze in der ersten Position die Abwärtsrotation des Rotorblatts um die Achse unterstützt und das aerodynamische Profil des Rotorblatts mit der Spitze in der zweiten Position die Aufwärtsbewegung des Rotorblatts um die Achse unterstützt.

5. Verfahren zum Betreiben einer Rotorblattanordnung für eine Turbine, die eine Vielzahl von Rotorblättern (80) umfasst, welche dazu angeordnet sind, um eine Achse zu rotieren, und wobei die Rotorblätter einen Körperabschnitt (82) und eine gelenkig an dem Körperabschnitt befestigte Spitze (84) umfassen; wobei das Verfahren umfasst:
Bereitstellen eines Sensors zum Bestimmen einer Rotationsposition eines ausgewählten der Rotorblätter relativ zu der Achse und Bereitstellen eines Aktors, der mit dem Sensor verbunden ist, wobei das Verfahren ferner umfasst, den Aktor zum Rotieren der Spitze um ihre Gelenkachse zwischen einer ersten Position und einer zweiten Position in Abhängigkeit von der Rotationsposition des Rotorblatts um die Achse zu verwenden, um das aerodynamische Profil des Rotorblatts verändern, und dadurch die Rotationsbewegung des Rotorblatts zu unterstützen, wobei die Gelenkachse sich in der Ebene des Rotorblatts befindet und mit Bezug auf die Längsachse des Rotorblatts geneigt ist.

6. Verfahren gemäß Anspruch 5, das ferner umfasst, den Aktor zu verwenden, um die Spitze an eine erste Position zu bewegen, während das Rotorblatt eine Abwärtsbewegung ausführt, und die Spitze an eine zweite Position zu bewegen, während das Rotorblatt eine Aufwärtsbewegung ausführt.

7. Verfahren gemäß Anspruch 6, bei dem das aerodynamische Profil des Rotorblatts mit der Spitze in der ersten Position die Abwärtsrotation des Rotorblatts um die Achse unterstützt und das aerodynamische Profil des Rotorblatts mit der Spitze in der zweiten Position die Aufwärtsbewegung des Rotorblatts um die Achse unterstützt.

## Revendications

1. Agencement de pales pour une turbine comprenant une pluralité de pales (80) agencées pour tourner autour d'un axe :
les pales comprenant des parties de corps (82) ayant des extrémités (84) respectives dans lequel les extrémités sont articulées (90) sur les parties de corps et peuvent tourner autour de l'axe d'articulation entre une première position et une seconde position pour faire varier les propriétés aérodynamiques des pales, dans lequel ledit axe d'articulation est dans le plan de la pale et incliné par rapport à l'axe longitudinal de la pale
l'agencement de pales comprenant en outre:
un capteur pour déterminer une position de rotation d'une ou plusieurs sélectionnées desdites pales relativement à l'axe, et,
un actionneur agencé pour déplacer la pointe des une ou plusieurs pales sélectionnées entre les première et seconde positions en fonction de ladite position de rotation pour modifier le profil aérodynamique de la pale sélectionnée pour aider au mouvement de rotation de la pale.

2. Agencement de pales selon la revendication précédente dans lequel l'actionneur comprend un système de moteur et de poulie (96).

3. Agencement de pales selon l'une quelconque des revendications précédentes dans lequel l'actionneur déplace la pointe dans la première position quand la pale subit un mouvement vers le bas et déplace la pale vers la seconde position quand la pale subit un mouvement vers le haut.

4. Agencement de pales selon l'une quelconque des revendications précédentes dans lequel le profil aérodynamique de la pale avec la pointe dans la première position aide une rotation vers le bas de la pale autour de l'axe, et le profil aérodynamique de la pale avec la pointe dans la seconde position aide un mouvement vers le haut de la pale autour de l'axe.

5. Procédé d'utilisation d'un agencement de pales pour une turbine comprenant une pluralité de pâles (80) agencées pour tourner autour d'un axe, et les pales comportant une partie de corps (82) et une extrémité (84) articulée sur la partie de corps ; le procédé comprenant :
de fournir un capteur pour déterminer une position de rotation de l'une sélectionnée desdites pales relativement à l'axe, et de fournir un actionneur connecté au capteur, le procédé comprenant en outre d'utiliser l'actionneur pour faire tourner la pointe autour de son axe d'articulation entre une première position et une seconde position en fonction de la position de rotation de la pale autour de l'axe, afin de modifier le profil aérodynamique de la pale, et ainsi aider au mouvement de rotation de la pale, ledit axe d'articulation étant dans le plan de la pale et incliné par rapport à l'axe longitudinal de la pale.

6. Procédé selon la revendication 5 comprenant en outre d'utiliser l'actionneur pour déplacer la pointe vers une première position alors que la pale subit un mouvement vers le bas et déplacer la pointe vers une seconde position quand la pale subit un mouvement vers le haut.

7. Procédé selon la revendication 6 dans lequel le profil aérodynamique de la pale avec la pointe dans la première position aide à une rotation vers le bas de la pale autour de l'axe, et le profil aérodynamique de la pale avec la pointe dans la seconde position aide à un mouvement vers le haut de la pale autour de l'axe.
